# EUROPEAN PATENT APPLICATION

(11) **EP 4 844 223 A1**
(43) Date of publication of application: **25.11.2026**
(21) Application number: 25178192.8
(22) Date of filing: 22.05.2025
(51) Int. Cl.: F03D 1/06

(54) **A WIND PARK WITH A ROTOR HAVING A ROTOR BLADE AND AN EXTENDER**

(71) Applicant: Nordex Energy SE & Co. KG, 22419 Hamburg (DE)
(72) Inventor: Malischewski, Mathias, 22419 Hamburg (DE)
(74) Representative: Hauck Patent- und Rechtsanwälte PartmbB

(57) **Abstract**

A wind park comprising a first wind turbine and a second wind turbine, each wind turbine having a rotor with a rotor hub and at least one rotor blade connected to the rotor hub by means of an extender which is arranged between the rotor hub and the rotor blade and has an extender length, wherein the extender length of the extender of the first wind turbine is smaller than the extender length of the extender of the second wind turbine, wherein the rotor blade of the first wind turbine has the same blade length as the rotor blade of the second wind turbine.

## Description

The invention relates to a wind park comprising a first wind turbine and a second wind turbine and to a wind turbine for such a wind park.

A wind park comprises a plurality of wind turbines which are installed in a certain area, wherein a distance between at least some of the wind turbines is such that the operation of one of the wind turbines affects operation of at least another one of the wind turbines. In particular, a wind turbine arranged upwind of another, downwind wind turbine will cause turbulences having an impact on the loads of the downwind turbine. Taking these site-specific or inter turbine-specific operating conditions into account is important to ensure safe and efficient operation of the wind park.

One known option is using different types of wind turbines within the wind park, each wind turbine being individually designed for a site/inter turbine-specific operating condition. The different types of wind turbines may have different generators, tower heights, rotor diameters, and so on.

Another option is to provide the wind park with essentially identical wind turbines which are however operated in different power modes. In this scenario, a wind turbine experiencing higher loads due to turbulences of another wind turbine arranged upwind will have the same rotor but will be operated with lower power. The different power modes can be implemented essentially based on software, using specific characteristic curves for generator torque and rotor speed, for example.

Departing therefrom, it is an object of the invention to provide a wind park with wind turbines adapted to site-specific operation conditions in a simple yet efficient manner, to provide a wind turbine for such a wind park and to provide a wind turbine rotor blade for such a wind turbine.

This object is solved by the wind park with the features of claim 1, by the wind turbine of claim 10 and by the wind turbine rotor blade of claim 15, respectively. Preferred aspects of the invention are given in the dependent claims.

The wind park comprises a first wind turbine and a second wind turbine, each wind turbine having a rotor with a rotor hub and at least one rotor blade connected to the rotor hub by means of an extender which is arranged between the rotor hub and the rotor blade and has an extender length, wherein the extender length of the extender of the first wind turbine is smaller than the extender length of the extender of the second wind turbine, wherein the rotor blade of the first wind turbine has the same blade length as the rotor blade of the second wind turbine.

The rotor of each wind turbine may have any number of rotor blades, for example two or three rotor blades. The rotors of both wind turbines are provided with an extender for each of their rotor blades. The radius of each rotor is therefore by the (effective) radius of the rotor hub plus the respective extender length plus the blade length. Because the extender length of the extender of the first wind turbine is smaller than the extender length of the extender of the second wind turbine, the radius of the rotor of the first wind turbine is also smaller than the radius of the rotor of the second wind turbine. These different dimensions can be used to adapt the first and second wind turbines of the wind park to the respective side-/inter turbine-specific operating conditions. For example, the second wind turbine having the larger rotor radius can be arranged at a forward position in the wind park which experiences less turbulences than the first wind turbine placed in a rearward position in the wind park, for example behind the second wind turbine.

Selecting different extender lengths for the wind turbines of the wind park in combination with one specific blade length is an easy and effective approach to adapt the wind turbines to the relevant operating conditions.

In an aspect, a difference between the extender length of the extender of the second wind turbine and the extender length of the extender of the first wind turbine is in a range of 1 % to 15 % of the blade length, preferably in a range of 2 % to 10 % of the blade length. It is therefore possible to vary the size of the rotor over a relatively wide range, if desired required to account for different operating conditions.

In an aspect, the rotor blade of the first wind turbine has the same chord distribution and/or the same twist distribution and/or the same aerodynamic profile distribution and/or the same pre-bend as the rotor blade of the second wind turbine. In particular, both rotor blades may be the same in each of the mentioned characteristics. Further in particular, both rotor blades may be identical. All rotor blades used for both wind turbines may therefore be exactly the same, so that economies of scale are obtained. In particular, the rotor blades used for both wind turbines may conform to a specific design which offers optimal aerodynamic performance in combination with a specific, intermediate extender length. Further below, this specific blade will be referred to as the design blade. In general, using the same blade design in combination with extenders of different lengths will lead to a sub-optimal aerodynamic performance for at least one of the two wind turbines. The sub-optimal aerodynamic performance will lead to a certain loss in annual energy production (AEP). However, the inventor found that this inevitable loss is less significant than one may expect, so that the inventive wind park is still more cost-efficient than many prior art solutions for adapting individual wind turbines to the relevant operating conditions.

In an aspect, the chord distribution and/or the twist distribution and/or the aerodynamic profile distribution is selected to provide optimal aerodynamic performance in combination with an extender having a design extender length which is different from at least one of the extender length of the extender of the first wind turbine and the extender length of the extender of the second wind turbine. For example, the mentioned characteristics of the wind turbine rotor blade may be optimized for a design extender length of 6 m. When the first wind turbine is used with an extender having a length of 3 m and the second wind turbine is used with an extender having a length of 9 m, both wind turbines will achieve a sub-optimal, but still acceptable aerodynamic performance/AEP.

In an aspect, the design extender length is in a range of 2 % to 10 % of the blade length, preferably in a range of 4 % to 8 % of the blade length. These exemplary ranges correspond to the idea to select an intermediate length as the design extender length, so that good performance can be obtained both with longer and shorter extenders.

In an aspect, the rotor comprises a pitch bearing arranged between the extender and the at least one rotor blade. Arranging the pitch bearing at this position allows fastening of the extender to the rotor hub in fixed, a non-rotatable manner. More importantly, also in combination with different extender lengths, the loads experienced by the pitch bearing will be roughly the same, so that the same pitch bearing type can be used for all rotors. This helps achieving economies of scale also with regard to the pitch bearings.

In an aspect, the extender of the first wind turbine and/or the extender of the second wind turbine comprises a load carrying structure consisting of a fibre-reinforced composite material. In general, any material may be used for the extender, for example comprising a load carrying structure of steel. Using a fibre-reinforced composite material in many cases is more cost-efficient.

In an aspect, the wind park comprises a third wind turbine having a rotor with a rotor hub and at least one rotor blade connected to the rotor hub by means of an extender which is arranged between the rotor hub and the rotor blade and has an extender length, wherein the extender length of the extender of the third wind turbine is smaller than the extender length of the extender of the second wind turbine and larger than the extender length of the extender of a first wind turbine, wherein the rotor blade of the third wind turbine has the same length as the rotor blade of the second wind turbine and in particular also the same chord distribution and/or the same twist distribution as the rotor blade of the second wind turbine. In particular, the rotor blade of the third wind turbine may be identical to the rotor blades of the first and second wind turbine. Using a third wind turbine with an extender having such an intermediate length provides a simple option for providing a third wind turbine adapted to "intermediate" operating conditions.

In an aspect, the wind park comprises a fourth wind turbine having a rotor with a rotor hub and at least one rotor blade connected to the rotor hub without an extender arranged between the rotor hub and the rotor blade, wherein the rotor blade of the fourth wind turbine has the same length as the rotor blade of the second wind turbine and in particular also the same chord distribution and/or the same twist distribution as the rotor blade of the second wind turbine. In particular, the rotor blade of the fourth wind turbine may be identical to the rotor blades of the first and/or second wind turbine. The fourth wind turbine provides another option using a similar or the same blade as the other wind turbines for adapting the fourth wind turbine to specific operating conditions.

The wind turbine of claim 10 for the wind park comprises a rotor with a rotor hub and at least one rotor blade connected to the rotor hub by means of an extender which is arranged between the rotor hub and the rotor blade and has a selected extender length, wherein the rotor blade has a blade length, a chord distribution and a twist distribution, wherein the chord distribution and/or the twist distribution of the rotor blade are designed to provide an optimal aerodynamic performance in combination with an extender having a design extender length, wherein the selected extender length is different from the design extender length. The wind turbine is therefore operated with sub-optimal aerodynamic performance on purpose, so as to adapt the wind turbine to given operating conditions and using rotor blades that can also be used for all other wind turbines of the wind park, if desired.

In an aspect, a difference between the selected extender length and the design extender length is in a range of 2 % to 10 % of the blade length, preferably in a range of 2 % to 10 % of the blade length. In an aspect, the rotor hub comprises a pitch bearing arranged between the extender and the at least one rotor blade. In an aspect, the extender comprises a load carrying structure consisting of fibre-reinforced composite material. With regard to these aspects of the wind turbine, reference is made to the foregoing explanations of the related wind park, which apply correspondingly.

In an aspect, the wind turbine comprises a type certificate certifying structural integrity of the wind turbine in combination with a rotor with a rotor hub, at least one rotor blade and an extender mounted therebetween, wherein the type certificate covers extenders having at least two different extender lengths. Obtaining a valid type certificate for a wind turbine is a complex process which requires substantial calculations and/or testing as well as excessive paperwork. To minimize these efforts, in this aspect a type certificate is obtained which is valid for the wind turbine when using different extender lengths. For example, the type certificate may be issued in accordance with IEC 61400.

The wind turbine rotor blade of claim 15 has a blade length, a chord distribution, a twist distribution and a load carrying structure, wherein the chord distribution and/or the twist distribution of the rotor blade is designed to provide optimal aerodynamic performance in combination with an extender having a design extender length, wherein the load carrying structure is designed to withstand the design loads expected when operating the wind turbine rotor blade in combination with an extender having an extender length larger than the design extender length. When following conventional wind turbine rotor blade design processes, each wind turbine rotor blade type will be designed for a rotor having a certain rotor diameter. Both the geometrical characteristics of the wind turbine rotor blade determining the aerodynamic performance as well as the load carrying structure will be designed according to the requirements when using the wind turbine rotor blade with a rotor of this specific diameter. In accordance with the invention, however, the geometry of the wind turbine rotor blade is designed to obtain optimal aerodynamic performance in combination with an extender having the design extender length. However, the wind turbine rotor blade in accordance with the invention shall be used also in combination with an extender having a greater length than the design extender length, that is with a rotor having a larger diameter. To handle the higher loads in this case, the load carrying structure is designed with the design loads when operating the wind turbine rotor blade in combination with the longer extender. The wind turbine rotor blade therefore is suitable for use with all of the different extender lengths desired for example in a certain wind park.

In the following, the invention is explained in greater detail based on drawings. The figures show:
- Fig. 1: a wind park with four wind turbines in a schematic view,
- Fig. 2: parts of the rotor of each of the four wind turbines of Fig. 1,
- Fig. 3: a rotor blade used for all four wind turbines of the wind park in a side view,
- Fig. 4: the rotor blade of Fig. 3 seen in cross section at different positions along the blade length.

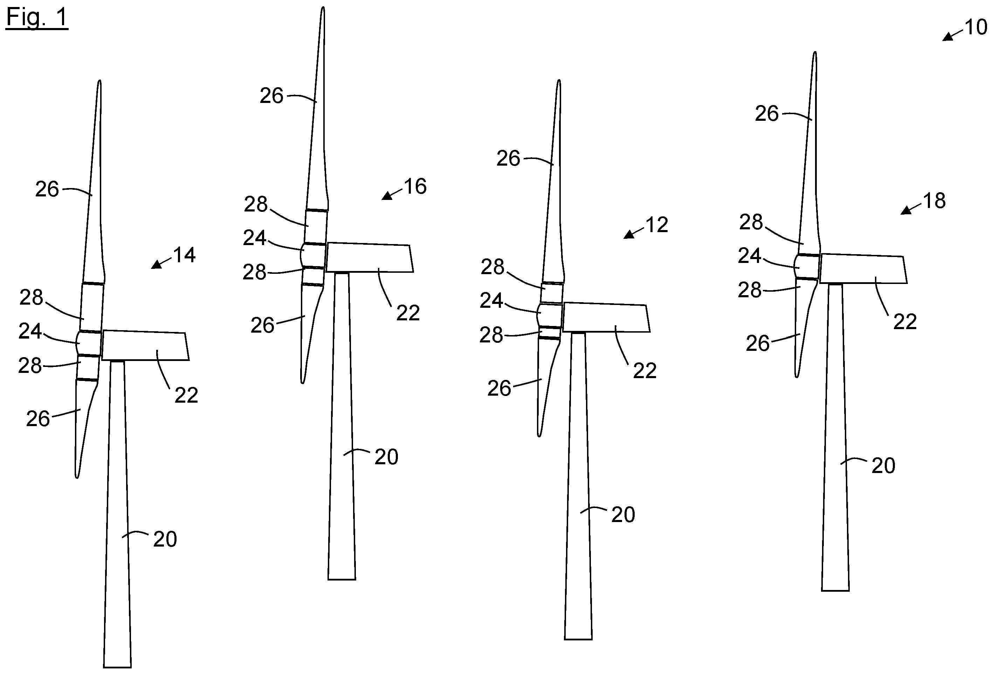

The wind park 10 of Fig. 1 comprises a first wind turbine 12, a second wind turbine 14, a third wind turbine 16 and a fourth wind turbine 18. The wind turbines 12, 14, 16, 18 each have a tower 20, a nacelle 22 mounted at the top of the tower 20 and a rotor with a horizontal axis mounted to the nacelle 22, a rotor hub 24 and at least one rotor blade 26. In the example, each rotor has three rotor blades 26, wherein one of the three rotor blades 26 is drawn pointing exactly upwards for illustrative purposes.

Each of the wind turbines 12, 14, 16, 18 experiences slightly different operating conditions, influenced by the local environment and also by the operation of the other wind turbines 12, 14, 16, 18 in the wind park 10. When assuming a predominant wind direction in the Fig. is from left to right, the second wind turbine 14 will experience the wind mostly undisturbed by the operation of the other wind turbines 12, 16, 18, while the fourth wind turbine 18 will possibly experience turbulences caused by each of the three other wind turbines 12, 14, 16.

The first, second and third wind turbines 12, 14, 16 each have a rotor with rotor blades 26 connected to the rotor hub 24 by means of an extender 28 which is arranged between the rotor hub 24 and the rotor blade 26.

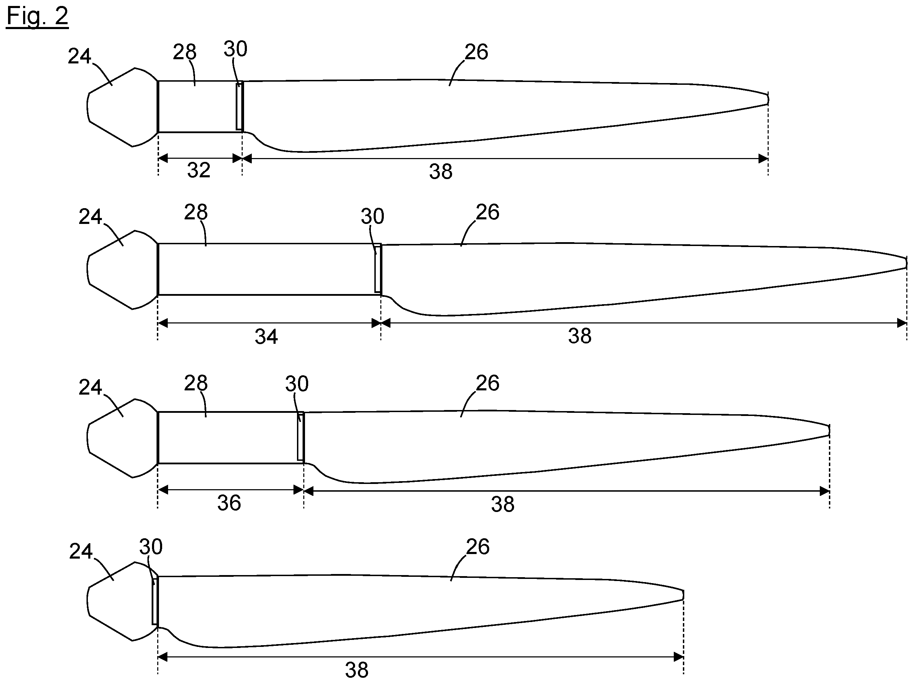

The extenders 28 have different extender lengths 32, 34, 36 indicated in Fig. 2, showing from top to bottom the rotor hub 24 with one of the rotor blades 26 connected thereto for the first, second, third and fourth wind turbine 12, 14 16, 18. The extenders 28 used for the rotors of the first, second and third wind turbine 12, 14, 16 comprise a fiber-reinforced composite material.

The extender length 32 of the extender 28 of the first wind turbine 12 is smaller than the extender length 34 of the extender 28 of the second wind turbine 14. The extender length 36 of the extender 28 of the third wind turbine 16 is larger than the extender length 32 of the first wind turbine 12 and smaller than the extender length 34 of the second wind turbine 14. The fourth wind turbine 18 has a rotor without extenders 28. The rotor blades 26 of the fourth wind turbine 18 are connected to the rotor hub 24 without an extender 28 arranged between the rotor hub 24 and the rotor blade 26.

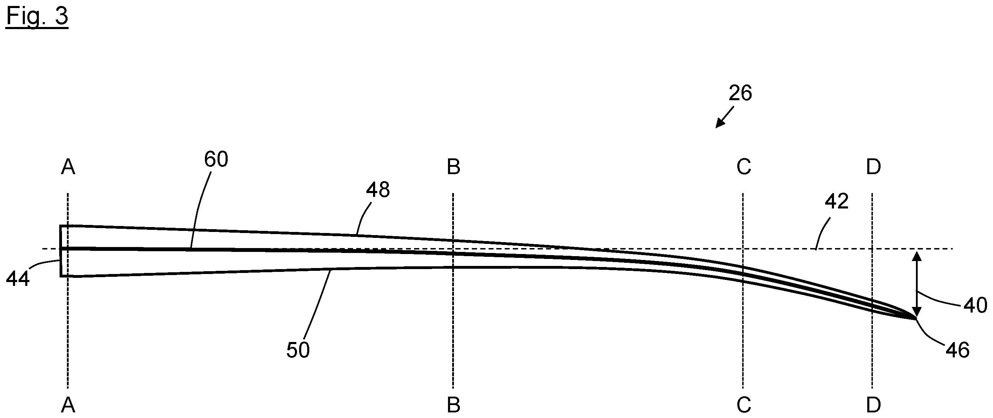

All rotor blades 26 shown are identical, in particular they have the same blade length 38, the same twist distribution, the same profile distribution and the same pre-bend 40 (see Fig. 3).

In addition, Fig. 2 schematically indicates a pitch bearing 30 to which the respective rotor blade 26 is attached. In the rotors of the first, second and third wind turbine 12, 14, 16 the pitch bearing 30 is arranged at the outer end of the respective extender 28. In the rotor of the fourth wind turbine 18, the pitch bearing 30 is arranged at the rotor hub 24.

Fig. 3 shows one of the rotor blades 26 in a view directed along the rotor plane. The rotor blade 26 has a suction side 48, a pressure side 50 and a pitch axis 42 defined by the geometry of a blade root 44. The blade tip 46 is arranged offset from the pitch axis 42 in a direction perpendicular to the rotor plane by a pre-bend 40.

The rotor blade 26 has a load carrying structure 60 which in Fig. 3 is represented as a line. In reality, the load carrying structure may comprise one or more spars and spar caps, which may be integrated into blade shell structure. The load carrying structure 60 is designed to withstand loads expected when operating the rotor blade 36 in combination with an extender 28 having the largest extender length 34, as in the second wind turbine 14.

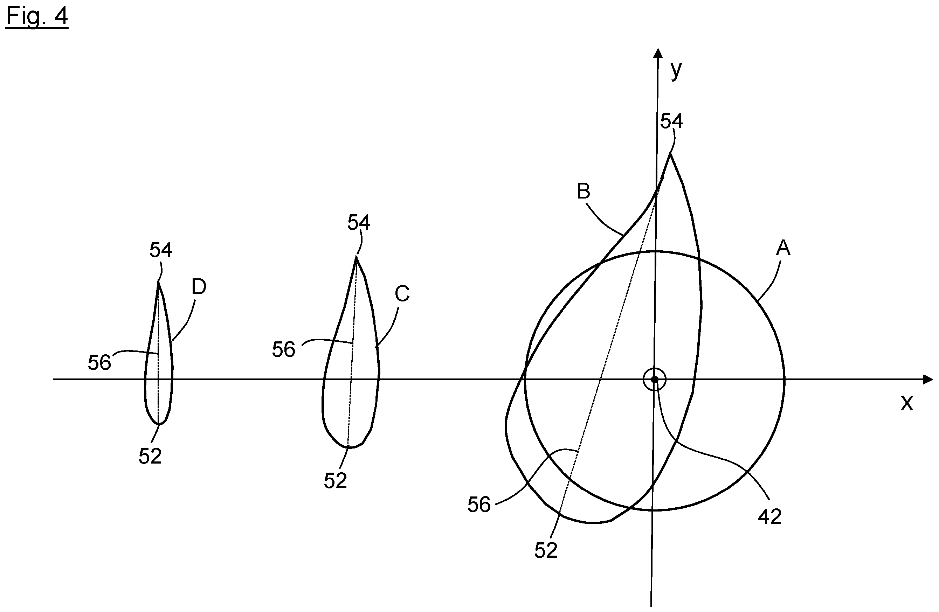

Fig. 4 shows the rotor blade 26 of Fig. 3 in four cross sections labelled A to D in accordance with the longitudinal positions indicated A-A to D-D in Fig. 3. The x-axis shown in Fig. 4 corresponds to the rotor axis. The cross section A is near the blade root 44, where the cross section of the rotor blade 26 is circular. The other cross sections B, C and D have an aerodynamic profile with a leading edge 52 and a trailing edge 54 and a chord 56 connecting the leading edge 52 and the trailing edge 54. The pitch axis 42 is perpendicular to the drawing plane. The growing distance between the pitch axis 42 and the cross sections from B to D is caused by the rotor blade's pre-bend 40.

Each chord 56 is arranged at a certain angle 58 with reference to the rotor plane. Of course, these angles 58 change with the pitch angle. The relative orientation of the angles 56 over the blade length 38, however, is fixed and is herein referred to as the twist distribution of the rotor blade 26. The different aerodynamic profiles used over the blade length 38 herein is referred to as the aerodynamic profile distribution of the rotor blade 26.

The geometry of the rotor blade 26, including its chord distribution, twist distribution, aerodynamic profile distribution and pre-bend 40, is designed to obtain optimal aerodynamic performance in combination with an extender 28 having a design extender length, which may correspond for example to the extender length 36 of the extender 28 of the third wind turbine 16.

### List of reference numerals

- 10: wind park
- 12: first wind turbine
- 14: second wind turbine
- 16: third wind turbine
- 18: fourth wind turbine
- 20: tower
- 22: nacelle
- 24: rotor hub
- 26: rotor blade
- 28: extender
- 30: pitch bearing
- 32: extender length
- 34: extender length
- 36: extender length
- 38: blade length
- 40: pre-bend
- 42: pitch axis
- 44: blade root
- 46: blade tip
- 48: suction side
- 50: pressure side
- 52: leading edge
- 54: trailing edge
- 56: chord
- 58: angle
- 60: load carrying structure
- A: cross section
- B: cross section
- C: cross section
- D: cross section

## Claims

1. A wind park (10) comprising a first wind turbine (12) and a second wind turbine (14), each wind turbine having a rotor with a rotor hub (24) and at least one rotor blade (26) connected to the rotor hub (24) by means of an extender (28) which is arranged between the rotor hub (24) and the rotor blade (26) and has an extender length, wherein the extender length (32) of the extender (28) of the first wind turbine (12) is smaller than the extender length (34) of the extender (28) of the second wind turbine (14), wherein the rotor blade (26) of the first wind turbine (12) has the same blade length (38) as the rotor blade (26) of the second wind turbine (14).

2. The wind park (10) of claim 1, wherein a difference between the extender length (34) of the extender (28) of the second wind turbine (14) and the extender length (32) of the extender (28) of the first wind turbine (12) is in a range of 1 % to 15 % of the blade length (38), preferably in a range of 2 % to 10 % of the blade length (38).

3. The wind park (10) of claim 1 or 2, wherein the rotor blade (26) of the first wind turbine (12) has the same chord distribution and/or the same twist distribution and/or the same aerodynamic profile distribution and/or the same pre-bend (40) as the rotor blade (26) of the second wind turbine (14).

4. The wind park (10) of claim 3, wherein the chord distribution and/or the twist distribution and/or the aerodynamic profile distribution is selected to provide optimal aerodynamic performance in combination with an extender (28) having a design extender length which is different from at least one of the extender length (32) of the extender (28) of the first wind turbine (12) and the extender length (34) of the extender (28) of the second wind turbine (14).

5. The wind park (10) of claim 4, wherein the design extender length is in a range of 2 % to 10 % of the blade length (38), preferably in a range of 4 % to 8 % of the blade length (38).

6. The wind park (10) of any of the claims 1 to 5, wherein the rotor comprises a pitch bearing (30) arranged between the extender (28) and the at least one rotor blade (26).

7. The wind park (10) of any of the claims 1 to 6, wherein the extender (28) of the first wind turbine (12) and/or the extender (28) of the second wind turbine (14) comprises a load carrying structure consisting of a fiber reinforced composite material.

8. The wind park (10) of any of the claims 1 to 7, wherein the wind park (10) comprises a third wind turbine (16) having a rotor with a rotor hub (24) and at least one rotor blade (26) connected to the rotor hub (24) by means of an extender (28) which is arranged between the rotor hub (24) and the rotor blade (26) and has an extender length (36), wherein the extender length (36) of the extender (28) of the third wind turbine (16) is smaller than the extender length (34) of the extender (28) of the second wind turbine (14) and larger than the extender length (32) of the extender (28) of the first wind turbine (12), wherein the rotor blade (26) of the third wind turbine (16) has the same length as the rotor blade (26) of the second wind turbine (14) and in particular also the same chord distribution and/or the same twist distribution as the rotor blade (26) of the second wind turbine (14).

9. The wind park (10) of any of the claims 1 to 8, wherein the wind park (10) comprises a fourth wind turbine (18) having a rotor with a rotor hub (24) and at least one rotor blade (26) connected to the rotor hub (24) without an extender (28) arranged between the rotor hub (24) and the rotor blade (26), wherein the rotor blade (26) of the fourth wind turbine (18) has the same blade length (38) as the rotor blade (26) of the second wind turbine (14) and in particular also the same chord distribution and/or the same twist distribution as the rotor blade (26) of the second wind turbine (14).

10. A wind turbine (12, 14, 16) for the wind park (10) of any of the claims 1 to 9, wherein the wind turbine (12, 14, 16) comprises a rotor with a rotor hub (24) and at least one rotor blade (26) connected to the rotor hub (24) by means of an extender (28) which is arranged between the rotor hub (24) and the rotor blade (26) and has a selected extender length, wherein the rotor blade (26) has a blade length (38), a chord distribution and a twist distribution, wherein the chord distribution and/or the twist distribution of the rotor blade (26) is designed to provide optimal aerodynamic performance in combination with an extender (28) having a design extender length, wherein the selected extender length is different from the design extender length.

11. The wind turbine (12, 14, 16) of claim 10, wherein a difference between the selected extender length and the design extender length is in a range of 2 % to 10 % of the blade length (38), preferably in a range of 2 % to 10 % of the blade length (38).

12. The wind turbine (12, 14, 16) of claim 10 or 11, wherein the rotor hub (24) comprises a pitch bearing (30) arranged between the extender (28) and the at least one rotor blade (26).

13. The wind turbine (12, 14, 16) of any of the claims 10 to 12, wherein the extender (28) comprises a load carrying structure consisting of a fiber reinforced composite material.

14. The wind turbine (12, 14, 16) of any of the claims 10 to 13, wherein the wind turbine (12, 14, 16) comprises a type certificate certifying structural integrity of the wind turbine (12, 14, 16) in combination with a rotor with a rotor hub (24), at least one rotor blade (26) and an extender (28) mounted therebetween, wherein the type certificate covers extenders having at least two different extender lengths (32, 34, 36).

15. A wind turbine rotor blade (26) for the wind turbine of any of the claims 10 to 14, wherein the wind turbine rotor blade (26) has a blade length (38), a chord distribution, a twist distribution and a load carrying structure (60), wherein the chord distribution and/or the twist distribution of the rotor blade (26) is designed to provide optimal aerodynamic performance in combination with an extender (28) having a design extender length, wherein the load carrying structure (60) is designed to withstand the design loads expected when operating the wind turbine rotor blade (26) in combination with an extender (28) having an extender length larger than the design extender length.
